# FASCICULE DE BREVET EUROPEEN

(11) **EP 0 421 117 B1**
(45) Date de publication et mention de la délivrance du brevet: **09.03.1994**
(21) Numéro de dépôt: 90116352.7
(22) Date de dépôt: 27.08.1990
(51) Int. Cl.: B23Q 5/58, B23K 26/00, F16P 5/00

(54) **Tête d'usinage à faisceau laser**
Laserstrahlbearbeitungskopf
Laser beam machining head

(30) Priorité: 05.09.1989 CH 3225/89; 25.10.1989 FR 8914104
(43) Date de publication de la demande: 10.04.1991
(73) Titulaire: LASAG AG, CH-3600 Thun (CH)
(72) Inventeur: Hauert, Ulrich, CH-3253 Schnottwil (CH)
(74) Mandataire: Caron, Gérard

(56) Documents cités:
- EP-A- 0 116 807
- GB-A- 2 062 234
- US-A- 4 733 048

## Description

L'invention concerne un outil destiné à travailler dans une position sensiblement verticale et sans contact avec une pièce à usiner et/ou à contrôler. Plus particulièrement, l'invention a trait à une tête d'usinage à faisceau laser ayant la possibilité de s'escamoter sans risquer d'être endommagêe lorsqu'elle rencontre un obstacle, par exemple à la suite d'une erreur de programmation de la machine.

Les outils permettant un usinage et/ou un contrôle sans contact avec une pièce, tels que les têtes d'usinage à faisceau laser comprennent des parties actives fragiles qu'il convient de protéger en cas de choc.

Dans le cas d'une tête d'usinage à faisceau laser, on entend par parties actives les moyens de focalisation constitués par une ou plusieurs lentilles logées dans la tête et associées à une buse d'usinage.

On sait que pour qu'une tête de ce type fonctionne correctement, c'est-à-dire que pour l'usinage s'effectue avec un bon rendement, il est nécessaire de régler le point de convergence du faisceau, d'une part, par rapport à la pièce et, d'autre part, par rapport à l'orifice de la buse.

Ce réglage est une opération délicate et présente une stabilité très moyenne en cas de choc de la tête avec un obstacle. En effet, un simple choc de la buse avec la pièce, par exemple dû à une erreur de manipulation ou de programmation de la machine, peut provoquer le désalignement de l'axe du faisceau laser avec l'orifice de la buse (dont le diamètre est de l'ordre de quelques millimètres) rendant ainsi la tête inutilisable sans le réajustement de la buse par rapport aux moyens de focalisation, et nécessitant, le cas échéant, le remplacement de la buse.

Or, comme cela à déjà été mentionné, l'opération de réglage des moyens de focalisation par rapport à la buse est délicate et nécessite d'être effectuée par des personnes hautement qualifiées.

Il en résulte donc que le moindre choc de la tête avec un obstacle entraîne des coûts élevés en main d'oeuvre d'une part et/ou en matériel d'autre part.

Pour remédier à ces problèmes, on connaît déjà un système utilisant des capteurs de forces destinés à arrêter en cas de choc tout mouvement de la tête par rapport à la pièce ou au bâti.

Ce type de système est efficace lorsque les mouvements de la tête par rapport à la pièce ou au bâti sont lents mais il ne permet pas toutefois de réagir suffisamment rapidement en cas de choc de la tête avec un obstacle à grande vitesse si bien que la tête qui est rigidement liée à son support risque fortement d'être endommagée.

D'autre part, on connaît du document EP 30754 un dispositif mécanique de protection contre les chocs pour une tête d'usinage à faisceau laser. Dans ce cas, la tête est montée, à la façon d'une rotule, à l'aide d'une pluralité de ressorts s'étendant suivant l'axe de la tête, sur une pièce support. Cette liaison rotule tête/support permet ainsi à la tête de s'effacer et de commander l'arrêt de la machine lorsqu'elle rencontre un obstacle de sorte que tout choc violent de la tête avec un élément extérieur est évité.

Cette tête d'usinage présente cependant les inconvénients d'être à la fois compliquée et d'une utilisation peu souple pour l'opérateur peu expérimenté.

En effet, si pour une raison quelconque, on désire, changer les lentilles de focalisation et/ou la buse pour réaliser un autre usinage, ou encore si l'on désire remplacer momentanément la partie active de la tête d'usinage par un dispositif d'observation, tel qu'un binoculaire, il est nécessaire de démonter la tête, de changer les lentilles et/ou la buse, d'effectuer le remontage et le réglage des lentilles par rapport à la buse puis de remonter l'ensemble sur la pièce support. Là encore, toutes ces opérations doivent être effectuées par une personne qualifiée ce qui entraîne un coût d'exploitation important.

On connaît également du document EP-A-0 116 807 un outil conforme au préambule de la revendication 1. Toutefois, les cavités recevant les ergots sont ménagées dans le fond de rainures étroites et profondes ce qui empêche un dégagement efficace des ergots des cavités dans le cas d'un choc violent, en particulier selon une direction perpendiculaire à l'axe de l'outil.

L'invention a donc pour but principal de remédier aux inconvénients de l'art antérieur susmentionné en fournissant un outil qui est destiné à travailler en position sensiblement verticale et sans contact avec une pièce et qui comporte un dispositif de protection contre les chocs, simple, efficace et qui, par ailleurs, peut être changé aisément par un simple opérateur sans nécessité de réglage particulier.

A cet effet, l'invention a pour objet un outil qui est destiné à travailler dans une position sensiblement verticale et sans contact avec une pièce à travailler et qui comprend une tête constituant au moins partiellement une partie active de l'outil, et un support de cette tête, relié de façon rigide à un bâti de la machine, ladite tête comprenant trois ergots reposant dans trois cavités ménagées dans le support pour empêcher un déplacement de la tête dans un plan sensiblement perpendiculaire à l'axe de la tête, caractérisé en ce que ladite tête est reliée audit bâti par l'intermédiaire d'un soufflet, en ce que ladite tête repose librement sur ledit support par l'intermédiaire desdits ergots, en ce que les cavités sont des gorges en V s'étendant radialement et selon des axes concourants et débouchant au voisinage de la surface supérieure du support et en ce que la profondeur des gorges en V est approximativement égale ou inférieure au diamètre desdits ergots.

Grâce à ces caractéristiques, la tête de l'outil est toujours positionnée précisément dans les moyens de support sans toutefois y être reliée rigidement. Ainsi la tête peut aisément s'escamoter ou s'effacer en cas de choc avec un obstacle, quelque soit la violence et/ou la direction de ce choc.

De manière avantageuse, on notera que l'absence de liaison rigide entre la tête et les moyens de support permet un remplacement de la tête rapide et sans réglage, (la tête ayant été préalablement réglée) puisque la tête se positionne automatiquement dans une position correcte sur les moyens de support.

D'autres avantages et caractéristiques de l'invention apparaîtront à la lecture de la description qui suit de modes de réalisation de l'invention donnés à titre illustratif et non limitatif en liaison avec les dessins annexés sur lesquels :
- la figure 1 est une vue schématique représentant de côté une machine d'usinage à faisceau laser comprenant une tête d'usinage selon l'invention,
- la figure 2 est une vue en perspective éclatée représentant une tête d'usinage à faisceau laser selon l'invention,
- la figure 3 est une vue de dessus représentant la pièce support de la partie active de la tête selon l'invention,
- la figure 4 est une vue en perspective de la tête selon l'invention représentant cette tête d'usinage dans une position escamotée à la suite d'un choc latéral de la buse avec une pièce à usiner et,
- la figure 5 est une vue partielle de dessus représentant une variante de réalisation de la liaison de la partie active avec la pièce support selon l'invention.

La description détaillée de l'outil selon l'invention va être faite dans le cadre d'une application à une tête d'usinage à faisceau laser.

Toutefois, il est bien entendu que l'invention n'est pas limitée à l'application et aux modes de réalisation décrits ou envisagés. Par exemple un outil selon l'invention peut comprendre dans sa partie active un dispositif de contrôle à émission d'ultrasons.

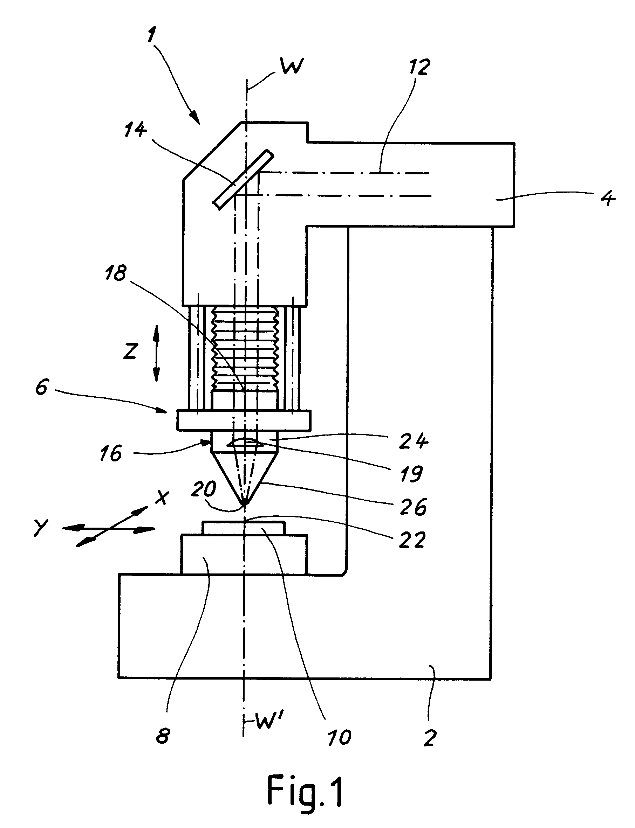

En se référant tout d'abord à la figure 1, on voit une machine d'usinage laser désignée par la référence numérique générale 1.

Cette machine comprend de manière connue un bâti 2 équipé d'une source laser 4, d'une partie 6 formant outil et d'une table 8 sur laquelle repose une pièce à usiner 10. La table et l'outil sont mobiles l'un par rapport à l'autre et commandés par des moteurs électriques (non représentés), par exemple en réponse à un programme de commande.

La table 8 est mobile dans un plan horizontal suivant les directions X, Y et l'outil 6 est mobile suivant la direction verticale Z.

La source laser 4 produit un faisceau 12 qui est réfléchi par un miroir 14 vers l'outil 6. Ce faisceau 12 pénètre dans la partie active 16 de l'outil par un orifice d'entrée 18 et est focalisé dans ce dernier de façon classique, par exemple par une lentille convergente 19 pour définir au voisinage d'une sortie 20 de l'outil un point de travail 22 situé sur la pièce à usiner 10.

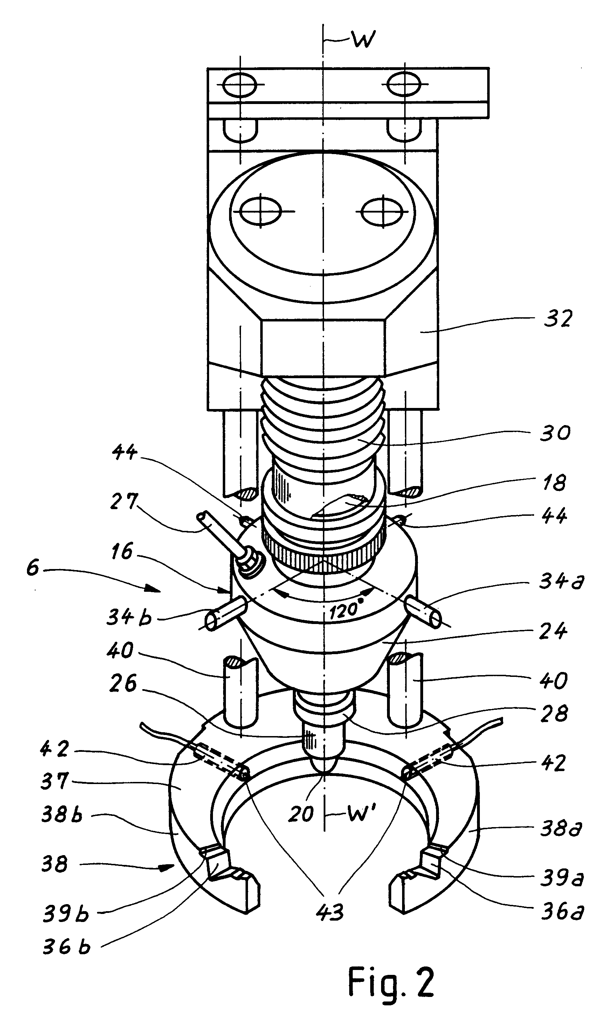

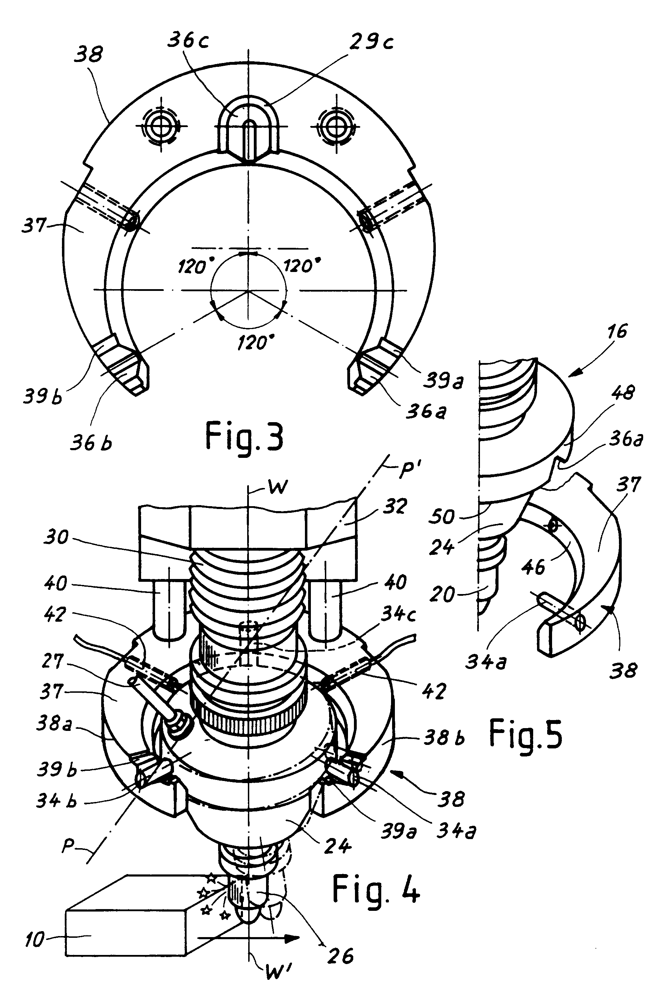

En se référant maintenant plus particulièrement aux figures 2 et 3, l'outil 6 selon l'invention comprend une partie active 16 que l'on désignera ci-après par tête d'usinage. La tête d'usinage 16 comprend un corps 24 cylindrique creux de forme générale tronconique formant un logement pour les moyens de focalisation du faisceau laser. Ce corps 24 présente, à son extrémité supérieure, un orifice d'entrée 18 du faisceau, dans sa partie médiane un ajutage 27 pour le gaz d'usinage et, à son extrémité libre inférieure, un orifice de sortie 20 défini par une buse d'usinage 26. Dans ce mode de réalisation, la buse d'usinage 26 est rapportée à l'aide d'une douille filetée 28 ; cependant, il est bien entendu que dans une variante de réalisation, la buse 26 peut être réalisée d'une seule pièce avec le corps 24 de la tête 16.

Comme cela ressort de la figure 2, l'extrémité supérieure comprenant l'orifice d'entrée 18 est reliée par l'intermédiaire d'un soufflet 30 à un boîtier 32 contenant le miroir 14 (non représenté sur cette figure).

En outre, le corps 24 comprend selon l'invention trois ergots respectivement 34a, 34b et 34c (dont seulement deux sont visibles sur les figures) formant des moyens de piètement. Ces trois ergots, qui sont constitués par exemple par des axes cylindriques, sont chassés dans des logements correspondants ménagés dans le corps 24 de sorte que ces ergots s'étendent radialement à partir de celui-ci. De préférence, ces ergots sont décalés sensiblement de 120° les uns autres par rapport aux autres et s'étendent dans un même plan perpendiculaire à la direction de travail W, W′ du faisceau.

Les ergots 34a, 34b, 34c reposent respectivement dans des cavités 36a, 36b, 36c correspondantes, ménagées sensiblement à 120° les unes par rapport aux autres sur la partie supérieure 37 d'une pièce support 38 et selon une direction radiale. Cette pièce support 38 s'étend dans un plan perpendiculaire à l'axe du faisceau et est reliée rigidement au bâti de la machine au moyen de deux colonnes 40 s'étendant parallèlement au corps 24 de la tête. Dans le mode de réalisation représenté, la pièce support présente la forme d'un fer à cheval afin de faciliter la mise en place de la partie inférieure de la tête dans le support. Toutefois, il est bien entendu que d'autres formes de pièces support auraient pu être envisagées comme par exemple une pièce support de forme annulaire.

Ainsi, lorsque la tête repose dans les cavités 36a, 36b, 36c la partie médiane de la tête se trouve entre les deux branches 38a, 38b de la pièce 38. On notera à ce propos que, de préférence, le centre de gravité de l'ensemble de la tête est situé en dessous du niveau du plan moyen de la pièce support 38 afin de conférer à la tête une plus grande stabilité, cette dernière ne reposant sur la pièce support que par son propre poids.

Comme cela ressort des figures 2 et 3, on voit que les cavités 36a, 36b, 36c ne sont pas directement réalisées dans la surface supérieure de l'élément support mais respectivement dans le fond d'une rainure droite 39a, 39b, 39c ménagée dans cette surface 37.

En effet, les flancs des gorges 36a, 36b, 36c se raccordent respectivement sur la surface de fond des rainures droites 39a, 39b, 39c. On notera que la profondeur des rainures 39a, 39b, 39c est approximativement égale ou inférieure au diamètre des ergots 34a, 34b, 34c et leur largeur est suffisante pour que les ergots, quand ils sont dégagés des gorges en V, puissent être reçus et supporter sans être directement bloqués par les surfaces des latérales des rainures 39a, 39b, 39c. Bien entendu, dans un mode de réalisation plus simple (non représenté) on peut prévoir que les flancs des gorges se raccordent directement à la surface supérieure 37 du support.

Afin d'assurer un bon positionnement de la tête dans la pièce support ainsi qu'un blocage de la tête dans le plan de la pièce support, les cavités présentent avantageusement la forme de gorges en V sur les flancs desquels reposent les ergots.

A ce propos, on notera que l'angle d'ouverture du V des gorges, qui est dans ce cas typiquement de 60°, détermine la force nécessaire pour faire sortir les ergots de ces cavités, cette force étant d'autant plus grande que l'angle sera petit.

La tête d'usinage comprend également des moyens de détection de chocs avec un élément extérieur tel que la pièce à usiner, la table de la machine ou analogue. Ces moyens de détection comprennent deux micro-interrupteurs mécaniques 42 aptes à délivrer le cas échéant un signal d'arrêt de la machine. Comme cela est visible aux figures 2 et 3, ces micro-interrupteurs sont montés dans chacune des branches 38a, 38b de la pièce support 38.

Ces micro-interrupteurs sont disposés entre les cavités 36a, 36b, 36c et sont décalés angulairement l'un par rapport à l'autre de 120° environ. Ainsi tout changement de position ou déplacement de la tête 16 en cours de travail est détecté.

Ces micro-interrupteurs sont reliés au circuit de commande de la machine (non représenté) et présentent une extrémité active 43 coopérant avec des plots de contact 44 ménagés en regard de ces extrémités 43 sur le corps de la tête, quand celle-ci est mise en place dans le support 38.

Le fonctionnement du dispositif va maintenant être décrit en liaison avec la figure 4 et plus précisément dans le cas d'un choc latéral de la tête d'usinage avec une pièce à usiner.

La tête 16 en position de travail (verticale) repose de par son propre poids sur l'élément support 38 et la pièce 10 se déplace par rapport à la tête par exemple dans un plan horizontal lorsque pour une raison quelconque telle qu'une erreur de programmation de la machine ou une erreur de manipulation de l'opérateur, la buse 26 heurte la pièce à usiner 10. A cet instant, la tête s'efface et tend à absorber le choc. Comme cela est représenté en pointillé à la figure 4, l'ergot 34a se dégage de sa cavité tandis que les deux autres 34b, 34c forment deux points d'appui par lesquels passe un axe PP′ autour duquel peut basculer la tête. Le déplacement de la tête entraîne l'ouverture (ou le cas échéant la fermeture) d'un ou des deux micro-interrupteurs 42 si bien que le circuit de commande reçoit un signal d'arrêt immédiat. A ce moment, l'opérateur peut intervenir simplement en dégageant l'obstacle et en mettant à nouveau la tête dans sa position de travail.

On notera de manière avantageuse que dans le cas d'un choc brusque, les trois ergots se dégagent simultanément de leurs cavités respectives et sont retenus dans les rainures 39a, 39b, 39c de sorte que la tête ne s'échappe pas du support 38.

Maintenant, on comprendra aisément que dans le cas d'un choc de la tête selon la direction verticale, la tête se soulève dégageant ainsi les ergots des cavités et actionnant les micro-interrupteurs.

Enfin, en se référant à la figure 5, on voit une vue partielle d'une variante de réalisation des moyens de pivotement et des moyens de support de la tête. Selon cette variante, les moyens de support comprennent un élément support 38 de forme générale identique à celle décrite en liaison avec les figures 2 à 4. Toutefois, trois ergots 34a, 34b, 34c s'étendent radialement et dans un même plan perpendiculaire à l'axe du faisceau à partir du la paroi interne 46 de l'élément support 38. Bien entendu, les trois ergots sont là encore décalés les uns par rapport aux autres de 120° environ.

Par ailleurs, les moyens de piètement de la tête présentent une structure complémentaire par laquelle elle peut reposer sur les trois ergots. Plus précisément, la tête comprend un épaulement 48 ou une bague supplémentaire présentant une surface de repos annulaire 50 dans laquelle sont ménagées les trois cavités 36a, 36b, 36c. Ces cavités également réparties autour de la tête s'étendant radialement et ont la forme d'une gorge en V.

Dans les modes de réalisation représentés, la tête d'usinage est de préférence verticale mais on notera que la tête selon l'invention peut être également utilisée dans le cas oû son axe de travail (W, W′) présente une faible inclinaison avec l'axe vertical, typiquement jusqu'à environ 30°.

## Revendications

1. Outil qui est destiné à travailler dans une position sensiblement verticale et sans contact avec une pièce à travailler (10) et qui comprend une tête (16) constituant au moins partiellement une partie active de l'outil (6), un support (38) de cette tête relié de façon rigide à un bâti (2) de machine, ladite tête comprenant trois ergots (34a, 34b, 34c) reposant dans trois cavités (36a, 36b, 36c) ménagées dans le support (38) pour empêcher un déplacement de la tête (16) dans un plan sensiblement perpendiculaire à l'axe (W-W') de l'outil, caractérisé en ce que ladite tête (16) est reliée audit bâti (2), en ce que ladite tête repose librement sur ledit support (38) par l'intermédiaire desdits ergots, en ce que les cavités (36a, 36b, 36c) sont des gorges en V s'étendant radialement et selon des axes concourrants et débouchant au voisinage de la surface supérieure (37) du support et en ce que la profondeur des gorges en V est approximativement égale ou inférieure au diamètre desdits ergots (34a, 34b, 34c).

2. Outil selon la revendication 1, caractérisé en ce que les flancs des gorges (36a, 36b, 36c) se raccordent respectivement sur les surfaces de fond de rainures (39a, 39b, 39c) ménagées dans la surface supérieure du support et en ce que la profondeur totale des gorges en V et des rainures est approximativement égale ou inférieure au diamètre des ergots (34a, 34b, 34c) et leur largeur est telle que les ergots peuvent être dégagés des gorges et reçus dans ces dernières sans un blocage immédiat contre leurs parois latérales, en cas de choc de la tête.

3. Outil selon l'une quelconque des revendications précédentes, caractérisé en ce que le support comprend un élément (38) ayant sensiblement la configuration d'un fer à cheval.

4. Outil selon l'une quelconque des revendications précédentes, caractérisé en ce que les ergots (34a, 34b, 34c) et les cavités (36a, 36b, 36c) sont respectivement décalés de 120° les uns par rapport aux autres et sont disposés respectivement dans un même plan.

5. Outil selon l'une quelconque des revendications précédentes, caractérisé en ce qu'il comprend en outre des moyens de détection (42) de chocs avec un élément extérieur, aptes à délivrer un signal d'arrêt de la machine.

6. Outil selon la revendication 5, caractérisé en ce que les moyens de détection comprennent deux micro-interrupteurs (42).

7. Outil selon l'une quelconque des revendications précédentes, caractérisé en ce que la tête (16) est une tête à faisceau laser (12) et en ce qu'elle comprend des moyens de focalisation (19) du faisceau (12).

## Claims

1. Tool for working in a substantially vertical position and without contact with a workpiece (10) and which comprises a head (16) constituting at least partially an operating part of the tool (6), a support (38) for this head rigidly connected to a machine frame (2), said head comprising three studs (34a, 34b, 34c) resting in three cavities (36a, 36b, 36c) provided in the support (38) to impede displacement of the head (16) in a plane substantially perpendicular to the axis (W-W') of the tool, characterized in that said head (16) is connected to said frame (2), in that said head freely rests on said support (38) via said studs, in that the cavities (36a, 36b, 36c) are V-shaped recesses extending radially and along competing axes and opening into the proximity of the upper surface (37) of the support and in that the depth of the V-shaped recesses is approximately equal to or less than the diameter of said studs (34a, 34b, 34c).

2. Tool according to claim 1, characterized in that the sides of the recesses (36a, 36b, 36c) connect respectively onto the surfaces of the base of grooves (39a, 39b, 39c) provided in the upper surface of the support and in that the total depth of the V-shaped recesses and the grooves is approximately equal to or less than the diameter of the studs (34a, 34b, 34c) and the width of which is such that the studs can be disengaged from the recesses and received in these latter without immediate blockage against their lateral walls in the event of a shock to the head.

3. Tool according to any one of the preceding claims, characterized in that the support comprises an element (38) having substantially the configuration of a horseshoe.

4. Tool according to any one of the preceding claims, characterized in that the studs (34a, 34b, 34c) and the cavities (36a, 36b, 36c) are respectively staggered by 120° in respect of one another and are disposed respectively in the same plane.

5. Tool according to any one of the preceding claims, characterized in that it comprises in addition shock detection means (42) having an outer element capable of delivering a signal to stop the machine.

6. Tool according to claim 5, characterized in that the detection means comprise two microswitches (42).

7. Tool according to any one of the preceding claims, characterized in that the head (16) is a laser beam head (12) and in that it comprises focussing means (19) for the beam (12).

## Patentansprüche

1. Werkzeug, das dazu bestimmt ist, in einer im wesentlichen vertikalen Position und ohne Kontakt mit einem Werkstück (10) zu arbeiten, welches einen Kopf (16) umfaßt, der mindestens teilweise eine aktive Partie des Werkzeugs (6) bildet, einen Support (38) dieses Kopfes umfaßt, starr verbunden mit einem Gestell (2) der Maschine, wobei der Kopf drei Fortsätze (34a, 34b, 34c) aufweist, die in drei Ausnehmungen (36a, 36b, 36c) ruhen, welche in den Support (38) eingearbeitet sind zum Unterdrücken einer Verlagerung des Kopfes (16) in einer Ebene im wesentlichen senkrecht zu der Werkzeugachse (W-W'), dadurch gekennzeichnet, daß der Kopf (16) mit dem Gestell (2) verbunden ist, daß der Kopf frei auf dem Support (38) über die genannten Fortsätze aufruht, und daß die Ausnehmungen (36a, 36b, 36c) V-Nuten sind, die sich radial erstrecken und gemäß zusammenlaufenden Achsen und in der Nähe der oberen Oberfläche (37) des Supports münden, und daß die Tiefe der V-Nuten annähernd gleich oder kleiner dem Durchmesser der Fortsätze (34a, 34b, 34c) ist.

2. Werkzeug nach Anspruch 1, dadurch gekennzeichnet, daß die Flanken der Nuten (36a, 36b, 36c) jeweils in Verbindung stehen mit den Oberflächen des Bodens von Nuten (39a, 39b, 39c), die in die obere Oberfläche des Supports eingearbeitet sind, und daß die Gesamttiefe der V-Nuten und der Nuten etwa gleich oder kleiner dem Durchmesser der Fortsätze (34a, 34b, 34c) ist und ihre Breite derart ist, daß die Fortsätze aus den Nuten freikommen und in diesen letzteren ohne eine unmittelbare Blockierung gegen ihre Seitenwandungen aufgenommen werden im Falle eines Stoßes des Kopfes.

3. Werkzeug nach einem der vorangehenden Ansprüche, dadurch gekennzeichnet, daß der Support ein Element (38) mit im wesentlichen der Konfiguration eines Hufeisens umfaßt.

4. Werkzeug nach einem der vorangehenden Ansprüche, dadurch gekennzeichnet, daß die Fortsätze (34a, 34b, 34c) und die Ausnehmungen (36a, 36b, 36c) zueinander um 120° versetzt sind und in ein und derselben Ebene angeordnet sind.

5. Werkzeug nach einem der vorangehenden Ansprüche, dadurch gekennzeichnet, daß es ferner Mittel (42) zum Erkennen des Stoßes mit einem äußeren Element umfaßt, ausgebildet zum Abgeben eines Anhaltesignals der Maschine.

6. Werkzeug nach Anspruch 5, dadurch gekennzeichnet, daß die Erkennungsmittel zwei Mikro-Unterbrecher (42) umfassen.

7. Werkzeug nach einem der vorangehenden Ansprüche, dadurch gekennzeichnet, daß der Kopf (16) ein Laserstrahlkopf (12) ist, und daß es Mittel zum Fokalisieren (19) des Strahls (12) umfaßt.
